(19) Europäisches Patentamt
European Patent Office
Office européen des brevets

(11) Veröffentlichungsnummer: **0 224 182 B1**

# (12) EUROPÄISCHE PATENTSCHRIFT

(45) Veröffentlichungstag der Patentschrift: **11.04.90**

(51) Int. Cl.⁴: **C01B 33/34**

(21) Anmeldenummer: **86115963.0**

(22) Anmeldetag: **18.11.86**

## (54) Verfahren zur Herstellung eines kristallinen, quellfähigen Schichtsilikats vom Saponit-Typ.

(30) Priorität: **26.11.85 DE 3541666**

(43) Veröffentlichungstag der Anmeldung: **03.06.87 Patentblatt 87/23**

(45) Bekanntmachung des Hinweises auf die Patenterteilung: **11.04.90 Patentblatt 90/15**

(84) Benannte Vertragsstaaten: **BE DE FR GB IT NL**

(56) Entgegenhaltungen:
**DE-A- 3 149 131**
**FR-A- 2 189 491**
**US-A- 3 844 879**

**CHEMICAL ABSTRACTS, Band 100, Nr. 14, 2. April 1984, Seite 142, Zusammenfassung Nr. 105900e, Columbus, Ohio, US; & JP-A-58 181 718 (KUNIMINE KOGYO K.K.) 24-10-1983**

(73) Patentinhaber: **HOECHST AKTIENGESELLSCHAFT, Postfach 80 03 20, D-6230 Frankfurt am Main 80(DE)**

(72) Erfinder: **Blumenthal, Thomas, Dr., Geisenheimer Strasse 88, D-6000 Frankfurt am Main 71(DE)**
Erfinder: **Kalz, Hans-Jürgen, Dr., Gartenstrasse 32, D-6237 Liederbach(DE)**

EP 0 224 182 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft ein Verfahren zur Herstellung eines synthetischen, kristallinen, quellfähigen Schichtsilikats vom Saponit-Typ aus einfachen Grundchemikalien bei erhöhter Temperatur.

Saponite stellen trioktaedrische Schichtsilikate vom Smektit-Typus dar mit der allgemeinen Formel:

$$[Mg_6(Si_{8-x}Al_x)O_{20}(OH)_4]^{x-} \cdot \frac{x}{z} M^{z+} \cdot n\ H_2O \quad ,$$

wobei x kleiner als 1,2 ist, z gleich 1, 2 oder 3 sein kann und M ein Kation der Wertigkeit z bedeutet. n bezeichnet einem vom Trocknungsgrad abhängigen Wassergehalt.

Schichtsilikate vom Smektit-Typ stellen durch ihr ausgeprägtes Quellvermögen und ihre Kationen-Austauschkapazität wertvolle Rohstoffe für viererlei Anwendungsgebiete dar.

Die hydrothermale Synthese solcher Schichtsilikate wurde erstmals von W. NOLL beschrieben (Chemie der Erde 10, 1936, S. 9 ff.). Das dort aufgezeigte Verfahren der Reaktion in verdünnter wäßriger Lösung unter Überdruck wurde seither vielfach verbessert. H. STRESE und U. HOFMANN untersuchten die Darstellung von (Aluminium-freien) "Hectoriten" (Z. anorg. allg. Chem. 247, 1941, S. 65 ff.). Der Schwerpunkt der weiteren Entwicklung lag dann bei der Optimierung der Hectorit-Synthesen.

Nach dem Verfahren der DE-OS 3207886 erfolgt bei der Herstellung von Hectoriten die Zugabe der Komponenten und die Reaktion unter Druck bei Temperaturen von mindestens 110°C. Für die Gewinnung besonders gut kristallisierender Produkte wird Fluorid zugesetzt.

Die Gruppe der Saponite unterscheidet sich von der der Hectorite durch das völlige Fehlen von Fluor und Lithium und durch den Gehalt an Aluminium. Die Schichtladung entsteht daher hauptsächlich nicht durch den isomorphen Ersatz von Magnesium in den Octaederschichten, sondern durch Siliciumaustausch in den Tetraederschichten des Dreischichtminerals, z.B. durch Aluminium. Da zur Herstellung der Saponite weder Fluor noch Lithium notwending ist, sind diese quellfähigen Schichtsilikate besonders interessant.

Die DE-OS 23 19 199 beschreibt die Hydrothermal-Synthese eines mit Saponit verwandten meist fluoridhaltigen Smektits, der aber immer mit deutlichen Anteilen von Magnesiumoxid oder Magnesiumhydroxid verunreinigt ist.

H. SUQUET et al. synthetisierten Saponite mit verschiedenen Schichtladungen durch Reaktion der frisch dargestellten Oxide von Silicium, Aluminium und Magnesium bei 450°C und 15 Tagen Reaktionszeit (Clays, Clay Miner. 25, 1977, S. 231 ff.). Die US-PS 3 844 979 beschreibt die Darstellung von (bevorzugt wiederum fluoridhaltigen) Saponiten, wobei zunächst eine Mischung aus Wasser, Siliciumdioxid, Aluminiumoxid und Magnesiumoxid sowie eines ein- bis dreiwertigen Kations (bevorzugt Ammonium) mit einem Anion wie Hydroxid, Fluorid, Acetat oder Chlorid als Ausgangssuspension hergestellt wird. Aus dem gebildeten Niederschlag entsteht durch Altern und nachträgliches Erhitzen auf 290 - 370°C unter Druck das Produkt. Es wird direkt durch Trocknung des Reaktionsgemisches gewonnen, bevorzugt unter Vakuum.

Diese Verfahren benötigen aber alle sehr hohe Reaktionstemperaturen.

Ein ähnliches Verfahren schließlich beschreibt die DE-OS 3 149 131. Auch hier vermischt man die Oxide von Natrium, Magnesium, Silicium und Aluminium in wäßriger Lösung, schert die Mischung sehr stark (z.B. mit 3000 U/min) und kristallisiert durch mehrstündiges Rühren bei erhöhter Temperatur in alkalischem Milieu (bevorzugt bei pH 11 - 13). Bei Normaldruck ist dabei eine mindestens eintägige Kristallisation erforderlich. Bevorzugt werden leicht lösliche Oxide eingesetzt, z.B. wird als Magnesium-Komponente Magnesiumhydroxid, bzw. leicht lösliches MgO, bevorzugt.

Um das angestrebte Molverhältnis von Siliciumdioxid/Magnesiumoxid im Produkt zu halten, muß dabei die Siliciumkomponente im Überschuß eingesetzt werden (1 bis 2,5 Mol $SiO_2$ pro Mol MgO im Ansatz bei 0,8 bis 1,3 Mol $SiO_2$ pro Mol MgO im Produkt; im einzigen Beispiel liegt dieses Verhältnis bei 1 : 1 im Ansatz und bei 0,91 : 1 im Produkt). In der Mutterlauge verbleibt $SiO_2$. Das gebildete synthetische Schichtsilikat wird in der DE-OS 31 49 131 allerdings nicht näher charakterisiert, sondern gleich durch Behandlung mit organischen Kationen weiter verarbeitet.

Es bestand daher die Aufgabe, ein einfachen Verfahren zur Herstellung synthetischer Schichtsilikate vom Saponit-Typ anzugeben, das Saponite mit guten Verarbeitungseigenschaften und hohem Quellvermögen liefert. Bei diesem Verfahren sollten weder sehr hohe Temperaturen noch die Verwendung einer Schervorrichtung erforderlich sein.

Es wurde nun ein Verfahren zur Herstellung eines kristallinen quellfähigen Schichsilikats vom Saponit-Typ der Formel

$$[Mg_6(Si_{8-x}Al_x)O_{20}(OH)_4]^{x-} \cdot \frac{x}{z} M^{z+}\ n\ H_2O$$

gefunden, in der
x eine Zahl kleiner als 1,5 aber mindestens 0,2 ist,

z eine ganze Zahl von 1 bis 3 ist,
M ein Kation der Wertigkeit z bedeutet und
n eine Zahl unter 20 ist,
wobei man eine Magnesiumionen enthaltende wäßrige Lösung oder Suspension, eine Siliciumdioxid-Quelle, eine Aluminiumoxid-Quelle und eine Natriumoxid-Quelle vereinigt und die dabei verwendeten Atomverhältnisses Mg/Si und Mg/Al der Zusammensetzung des gewünschten Saponits entsprechen, das dadurch gekennzeichnet ist, daß das Atomverhältnis

$$(Na\text{-}Al) : (Mg + Si + 3/2 \cdot Al)$$

zwischen x/5 und 1 liegt, wobei Na die Menge der in alkalischen Verbindungen vorliegenden Natriumatome bedeutet und der pH-Wert des Reaktionsgemisches mindestens 9,0 beträgt, man die Kristalle des gebildeten synthetischen Saponits in der Natriumform von der Mutterlauge abtrennt und gegebenenfalls mit einer wäßrigen Lösung oder Suspension eines Salzes mit dem Kation $M^{z+}$ behandelt und nach erfolgtem Kationenaustausch von der wäßrigen Phase abtrennt. Als alkalische Natriumverbindungen gelten das Silikat, Aluminat, Carbonat und Hydroxid. Dieser Anteil verringert sich soweit er zur Neutralisation etwaiger saurer Verbindungen des Magnesiums (z.B. Chlorid) oder Aluminiums (z.B. Sulfat) unter Bildung der Hydroxide gebraucht wird.

Der Wert für x beträgt vorzugsweise 0,2 bis 1,4 insbesondere 0,3 bis 1,3. Der Wert für n hängt ab vom Trocknungsgrad des erhaltenen Schichtsilikates. Er ist für das Austauschvermögen des Schichtsilikates nicht von großer Bedeutung. Mit sinkendem n steigt jedoch der Gehalt an Wirksubstanz geringfügig an. Das Quellvermögen, insbesondere die Quellgeschwindigkeit, wird bei schärferer Trocknung etwas geringer. Bevorzugte Werte für n liegen unter 15, insbesondere unter 10 und im allgemeinen über 2.

Die wäßrige Lösung oder Suspension, die Magnesiumionen enthält, leitet sich vorzugsweise ab von leicht löslichen anorganischen Salzen des Magnesiums, wie Magnesiumchlorid, -Sulfat oder -Nitrat; Man kann jedoch auch andere, in heißem Wasser lösliche Magnesiumverbindungen einsetzen, z.B. frisch gefälltes Magnesiumhydroxid. Es ist bevorzugt, wenn die eingesetzten Verbindungen bei 100°C eine Löslichkeit von mindestens 50 g Magnesium pro Liter aufweisen. Diese Bedingung wird von Magnesiumhydroxid bzw. nicht geglühtem Magnesiumoxid nicht erfüllt.

Als Siliciumdioxid-Quelle kann ein Kieselsäure-Sol oder eine wäßrige Lösung oder Suspension von Kalium- oder Natriumwasserglas oder einer anderen löslichen Silicium-Sauerstoff-Verbindung verwendet werden.

Als Aluminiumoxid-Quelle werden wäßrige Lösungen oder Suspensionen von Aluminiumoxid, -Hydroxid oder Natriumaluminat oder anderer löslicher Aluminiumverbindungen eingesetzt. Beispielsweise läßt sich Kaliumalaun allein verwenden. Hierbei werden jedoch zusätzliche Mengen an basischen Verbindungen benötigt, um den gewünschten pH-Wert zu erreichen.

Als Natriumoxid-Quelle lassen sich wäßrige Lösungen oder Suspensionen von Verbindungen verwenden, die Natriumionen enthalten, insbesondere solcher die zusätzlich noch Hydroxyl-Ionen enthalten. Beispiele für einsetzbare Verbindungen sind Natriumcarbonat, Natriumhydroxid, Natriumsilikat und Natriumaluminat. Bevorzugt werden Natriumcarbonat und Natriumhydroxid im Molverhältnis 1: 5 bis 1 : 3 neben Natriumsilikat und Natriumaluminat eingesetzt. In geringen Mengen lassen sich auch Natriumsalze wie Natriumsulfat einsetzen, wenn zusätzlich andere basische Verbindungen wie Kaliumhydroxid für ein Erreichen des gewünschten pH-Werts sorgen.

Beim erfindungsgemäßen Verfahren ist das Molverhältnis $Na_2O/MgO$ im Ansatz größer als beim Verfahren der DE-OS 31 49 131. Ein bevorzugter Bereich für das Molverhältnis $Na_2O/MgO$ liegt bei 1 bis 5,0, insbesondere 1,2 bis 3,0.

Der zu beachtende pH-Wert der Reaktionsmischung beträgt vorzugsweise mindestens 9,5, insbesondere mindestens 10. Während der Reaktion sinkt der pH-Wert in manchen Fällen geringfügig ab. Falls bei Beeindigung der Reaktion und Abtrennen des Schichtsilikats der pH-Wert der Mutterlauge bei 8,5 Liegt, so ist dies ein Zeichen, daß der pH-Wert der Reaktionslösung zu Beginn der Reaktion erhöht werden sollte.

Für die Zugabe der Komponenten hat es sich bewährt, daß man zunächst eine wäßrige Lösung oder Suspension eines Magnesiumsalzes auf eine Temperatur von 110 bis 373°C, insbesondere 120 bis 300°C, unter Eigendruck aufheizt und in diesen Temperaturbereich, vorzugsweise unter ständiger Durchmischung, die Siliciumoxid-Quelle, die Aluminiumoxid-Quelle und die Natriumoxid-Quelle in Form wäßriger Lösung oder Suspensionen zugibt und dabei darauf achtet, daß die Natriumoxid-Quelle und die Aluminiumoxid-Quelle nicht vor der Siliciumoxid-Quelle zugegeben werden. Besonders bevorzugte Untergrenzen für die Temperaturintervalle bei Zugabe der Komponenten zum Magnesiumsalz sind 130°C, 150°C und 170°C; besonders bevorzugte Obergrenzen sind 250°C, 230°C und 210°C. Anschließend wird das Gemisch wiederum längere Zeit im Temperaturbereich von 100 bis 373°C, vorzugsweise im Bereich von 130 bis 300°C, insbesondere im Bereich von 150 bis 250°C gehalten.

Die Zugabe der Siliciumoxid-Quelle, der Aluminiumoxid-Quelle und der Natriumoxid-Quelle kann sehr schnell erfolgen; vorzugsweise dauert die Zugabe der einzelnen Komponente maximal eine Stunde. Es ist günstig, wenn ein Teil (1/4 bis (1/3) der Natriumoxid-Quelle zusammen mit der Siliciumoxid-Quelle und der Rest der Natriumoxid-Quelle zusammen mit der Aluminiumoxid-Quelle zugegeben werden. Bei Zudosieren

erwärmter Lösungen oder Suspensionen kann rascher gearbeitet werden. Vielfach genügt bereits die beim Ansetzen der Lösungen oder Suspensionen frei werdende Lösungswärme der alkalischen Ausgangsprodukte. Um eine gute Durchmischung zu erhalten, ist es vorteilhaft, während der Zugabe der Komponenten den Ansatz zu rühren, beispielsweise mit 50 bis 200 U/min. Eine stärkere Scherung, wie z.B. in der DE-OS 31 49 131 beschrieben, ist nicht erforderlich. Für die anschließende Reaktion bringt ein Rühren nur noch geringe Vorteile. Bevorzugt ist daher während der Reaktion ein Rühren mit weniger als 50 U/min.

Die Zugabe der einzelnen Komponenten im angegbenen Temperaturintervall muß unter Druck erfolgen. Beim Eindosieren der Komponenten ist in manchen Fällen aus apparativen Gründen nur ein mäßig hoher Druck möglich. In diesen Fällen ist es bevorzugt, wenn die Temperatur (und damit der Druck) während der eigentlichen Reaktion höher liegt als bei der Zugabe der Komponenten.

Die Dauer der Reaktion, bei der der Saponit gebildet wird, ist von der angewandten Temperatur und den gewünschten Eigenschaften abhängig. Bei niedrigerer Temperatur, größerem Aluminiumgehalt sowie höherer gewünschter Quellfähigkeit ist eine längere Reaktionszeit vorteilhaft. Im allgemeinen reichen Reaktionszeiten von 0,5 bis 10 Stunden aus. Beispielsweise genügt bei einer Temperatur von 220°C, geringer Konzentration (ca. 20 g/l $SiO_2$ + $Al_2O_3$), niedrigem Aluminiumanteil (Si : Al = 7,8 : 0,2) und hohem pH-Wert (über 12) eine Reaktionszeit von 1 Stunde, wenn nur eine mäßige gute Quellfähigkeit erzielt werden soll. Es ist bevorzugt, die Reaktion so lange durchzuführen, daß im Reaktionsansatz mindestens 50 g/l an kristallinem Schichtsilikat vom Saponit-Typ, vorzugsweise 60 bis 120 g/l Saponit, vorhanden sind.

Die Konzentration der Reaktionspartner ist nicht kritisch. Die Summe der Reaktionspartner Aluminiumoxid und Siliciumoxid kann z.B. 1 bis 200 g/l betragen. Es ist jedoch ein Vorteil des erfindungsgemäßen Verfahrens, daß man relativ konzentriert arbeiten kann. Bevorzugt ist es, wenn die Mengen Siliciumdioxid plus Aluminiumoxid pro Liter Reaktionsansatz zusammen mindestens 20 g/l, insbesondere 35 bis 110 g/l, vorzugsweise 35 bis 80 g/l betragen. Suspensionen mit über 5 Gew.-% Saponit lassen sich ohne weiteres gewinnen.

Nach beendeter Reaktion kühlt man den Ansatz auf Temperaturen unter 100°C ab und trennt das Feststoffgemisch von der Mutterlauge. Der Rückstand enthält außer Saponit noch zusätzlich lösliche Salze, deren Konstitution von den Ausgangsprodukten abhängt. Bei Verwendung von Magnesiumsulfat und Natronwasserglas liegt beispielsweise neben Saponit noch Natriumsulfat vor. Diese löslichen Salze lassen sich durch Waschen mit Wasser vollständig entfernen. Diese Entfernung ist aber bei vielen Anwendungsmöglichkeiten nicht erforderlich; so kann z.B. ein Kationenaustausch mit anorganischen Kationen (z.B. Schwermetall-Kationen) oder organischen Kationen (z.B. Tetraalkylammonium-Kationen) direkt an dem feuchten Filterkuchen ausgeführt werden, z.B. in Wasser/Alkohol-Gemischen als Lösungsmittel. Falls das Reaktionsgemisch für Waschmittelformulierungen bestimmt ist, läßt es sich nach teilweiser Entwässerung direkt einem Waschmittel-Slurry (enthaltend Wasser, anionische Tenside, nichtionische Tenside, Bleichmittel, Komplexbildner wie Polyphosphat und andere) zusetzen, der dann z.B. durch Sprühtrocknung getrocknet wird

Das nach dem erfindungsgemäßen Verfahren hergestellte Schichtsilikat besitzt ein Kationen-Austauschvermögen von 25 (x= 0,2, M= Na) bis 150 (x= 1,5, M=Na) Milliäquivalent/100 g. Die Austauschkapazität ist von der Schichtladung abhängig, läßt sich also durch den Aluminium-Anteil des Reaktionsansatzes ("x" in der allgemeinen Formel) weitgehend beeinflussen. Die rheologischen Eigenschaften des hergestellten Produkts sind abhängig von Quellvermögen, das recht deutlich über den pH-Wert des Reaktionsansatzes beeinflußbar ist. Je höher dieser pH-Wert ist, um so besser das Quellvermögen. Produkte mit niedriger Austauschkapazität sind meist besser quellfähig als solche mit höherer. Austauschkapazität; mit steigendem Aluminiumgehalt des Produktes werden immer höhere pH-Werte erforderlich, um ein befriedigendes Quellvermögen zu erhalten.

Die nach dem erfindungsgemäßen Verfahren hergestellten Saponite lassen sich, nach Auswaschen und Trocknen, in Wasser unter Bildung eines Sols leicht dispergieren. Das Sol kann, z.B. durch Zugabe eines Elektrolyten, in ein thixotropes Gel mit hoher Bingham-Fließgrenze überführt werden.

Im zunächst ausfallenden Saponit ist das Kation M weitgehend Natrium. Man kann jedoch durch Behandeln mit wäßrigen Lösungen oder Suspensionen von Salzen, die ein anderes Kation M enthalten, andere synthetische Saponite herstellen. Beispielsweise kann man mit Salzen von Kalium, den Erdalkalimetallen, Aluminium oder auch organischen Kationen behandeln. Der Austausch gegen das neue Kation kann vor oder nach dem Waschen des primär synthetisierten Saponits erfolgen. Dabei läßt sich Wasser als Reaktionspartner verwenden. Aber auch der getrocknete Saponit ist dem Austausch mit Kationen noch zugänglich, insbesondere wenn als Reaktionsmedium organische Lösemittel verwendet werden. Beim Austausch mit Schwermetall-Kationen werden Produkte erhalten, die sich ähnlich wie Zeolithe als Katalysatoren verwenden lassen.

Durch Austausch mit organischen Kationen erhält man wertvolle Gelbildner für organische Systeme, die für vielerlei Einsatzzwecke geeignet sind. Die Gegenwart der organischen Kationen verbessert Quellfähigkeit und Fließverhalten in organischen Lösemitteln.Beispielsweise lassen sich Trialkylsulfonium-Kationen oder Tetraalkylphosphonium-Kationen oder deren Mischungen verwenden. Bevorzugt werden vierfach substituierte organische Ammoniumsalze, insbesondere Tetraalkylammoniumsalze. Der Austausch gegen Organo-Kationen ist dem Fachmann im Prinzip bekannt, z.B. aus der DE-AS 1 667 502. An Stelle der Tetraalkylammoniumsalze lassen sich auch entsprechende Trialkylamine verwenden.

Die beim erfindungsgemäßen Verfahren hergestellten Saponit-Suspensionen (mit anorganischem Kation) eignen sich besonders für den Einsatz als Builder in Waschmittel-Formulierungen.

Die Verwendung von Saponiten allein als Weichmacher in Waschmitteln wird in der DE-OS 23 34 899 beschrieben. Gemäß DE-OS 25 03 585 werden Bentonite (natürliche Smektite) mit quarternären Ammoniumkationen in Waschmitteln eingesetzt. Hierfür eignen sich aber auch smektitartige Tone in Verbindung mit tertiären Aminen. Der Effekt von Smektiten zusammen mit tertiären Aminen und quarternären Ammoniumsalzen wird in der Eurpäischen Patentanmeldung 00 26 528 beschrieben.

Es ist vorteilhaft, daß die erfindungsgemäß hergestellten Saponite im Gegensatz zu den natürlichen, meist eisenhaltigen Smektiten keine störende Eigenfarbe zeigen. Es ist ein weiterer Vorteil, daß das hergestellte Produkt weder Fluoridnoch Lithium-Ionen im Gegensatz zu synthetischen Hektoriten enthält. Dies erleichtert den Einsatz in Hauschaltswaschmitteln. Es ist ein weiterer Vorteil des erfindungsgemäßen Verfahrens, daß das eingesetzte Siliciumdioxid sich praktisch quantitativ im Endprodukt wiederfindet.

Die Erfindung wird durch die folgenden Beispiele näher erläutert.

<u>Beispiel 1:</u>

296.2 g $MgSO_4$. 7 $H_2O$ werden in 600 ml Wasser gelöst und in einem Autoklaven auf 160°C erhitzt. Dazu pumpt man unter Rühren eine Mischung aus 312 g Natriumwasserglas-Lösung (27,8 % $SiO_2$; 8,3 % $Na_2O$) und 8 g NaOH in 800 ml Wasser. Anschließend fügt man bei weiterhin konstanter Temperatur (160 ± 5°C) eine Mischung von 50 g $Na_2CO_3$, 40 g NaOH und 25,2 g Natrium-Aluminat (54 % $Al_2O_3$; 45 % $Na_2O$) in 500 ml Wasser zu. Der Autoklav wird auf 195°C erhitzt und die Rührung abgestellt. Nach 5 h wird die Heizung abgestellt, die Reaktionsmischung abgekühlt und auf einer Nutsche mehrmals mit Wasser gewaschen. Nach Trocknung bei 140°C verbleiben 158 g Produkt (= 97 % Ausbeute, bezogen auf $SiO_2$). Weitere Reaktionsparameter sind in Tab. 1 aufgeführt, die Produkteigenschaften finden sich in Tab. 2.

<u>Beispiel 2:</u>

300 g $MgSo_4$. 7 $H_2O$ werden in 500 ml Wasser gelöst und in einem Autoklaven auf 160°C erhitzt. Unter Rühren pumpt man bei dieser Temperatur dazu eine Mischung aus 303 g Natriumwasserglas-Lösung (von Beispiel 1) und 8 g NaOH in 500 ml Wasser, gefolgt von einer Mischung aus 40 g $Na_2CO_3$ und 65 g NaOH und 19 g Natrium-Aluminat (von Beispiel 1) in 500 ml Wasser. Die Temperatur wird auf 195°C gesteigert und, ohne Rühren, für 4 h konstant gehalten. Anschließend kühlt man das Reaktionsgemisch ab und wäscht das Produkt mehrmals mit Wasser über eine Nutsche. Nach Trocknung bei 140°C beträgt die Ausbeute 160 g = 97 %.

<u>Beispiel 3:</u>

300 g $MgSO_4$. 7 $H_2O$ werden in 400 ml Wasser gelöst und in einem Autoklaven auf 160°C erhitzt. Dazu werden unter Rühren bei 160 ± 5°C 298 g Natriumwasserglas-Lösung (von Beispiel 1) und 8 g NaOH in 200 ml Wasser gepumpt. Anschließend dosiert man eine Mischung aus 40 g $Na_2CO_3$, 65 g NaOH und 23 g Natrium-Aluminat (von Beispiel 1) in 400 ml Wasser zu. Die Temperatur wird auf 195°C erhöht, die Rührung abgeschaltet und die Reaktionsmischung 4 h bei dieser Temperatur gehalten. Die Aufarbeitung (Abkühlen, Waschen und Trocknen) erfolgt wie in Beispiel 1. Die Ausbeute beträgt 163 g = 98 %.

<u>Beispiel 4:</u>

25,6 kg $MgSO_4$. 7 $H_2O$ werden in 50 l Wasser in einem Autoklaven auf 160°C erhitzt. Unter Rühren wird eine Mischung aus 26,5 kg Natriumwasserglas-Lösung (von Beispiel 1) 680 g NaOH und 68 l Wasser in etwa 40 min bei konstanter Temperatur (160 ± 5°C) zugepumpt. Anschließend wird eine Mischung aus 4,3 kg $Na_2CO_3$, 3,4 kg NaOH und 1295 g Natrium-Aluminat (von Beispiel 1) in 40 l Wasser in etwa 20 min bei konstanter Temperatur (160 ± 5°C) zugepumpt. Die Reaktionsmischung wird unter Eigendruck auf 200°C aufgeheizt und die Rührung auf ca. 50 U/min geregelt. Nach 4 h wird der Autoklav abgekühlt und die entstandene Suspension auf einem Filter teilenwässert. Der anfallende Filterkuchen (79,4 kg) ist stichfest, und besitzt einen Wassergehalt von 75,0 % und einen Saponit-Gehalt von 16,6 % (= 97 % Ausbeute). In der abgetrennten Mutterlauge kann weder Aluminium noch Magnesium komplexometrisch nachgewiesen werden; der $SiO_2$-Gehalt beträgt 77 mg/l (im Reaktionsansatz: 37000 mg/l). Nach Auswaschen und Trocknen besitzt das Produkt ein Saponit-typisches Röntgenbeugungsdiagramm.

<u>Beispiel 5</u> (Vergleichs-Beispiel, mit umgekehrter Reihenfolge):

Die Reaktion von Beispiel 2 wird in umgekehrter Reihenfolge durchgeführt, d.h. die Mischung aus $Na_2CO_3$, NaOH und Natrium-Aluminat wird vorgelegt und erhitzt. Dazu wird die Mischung aus Natriumwasserglas-Lösung und NaOH zudosiert und anschließend die $MgSo_4$-Lösung. Die Reaktion wird gem.

Beispiel 2 ausgeführt. Das entstandene Produkt zeigt zwar ebenfalls ein in 1. Näherung saponit-artiges Röntgenbeugungsdiagramm, jedoch mit viel größerer Halbwertsbreite beim (060)-Reflex (= schlechtere Kristallinität). Außerdem besitzt es eine im Vergleich zu Beispiel 2 deutlich niedrigere Austauschkapazität, ist schlechter quellfähig und bildet in 2 %iger wässriger Suspension kein thioxotropes Gel.

Beispiel 6 (Vergleichs-Beispiel, zu niedriger $Na_2O$-Überschuß):

123,4 g $MgCl_2$. 6 $H_2O$ werden in 500 ml Wasser gelöst und in einem Autoklaven auf 140°C erhitzt. Dazu dosiert man zunächst (bei 140 ± 5°C) ein Gemisch aus 156 g Natriumwasserglas-Lösung (von Beispiel 1) und 800 ml Wasser und dann eine Mischung aus 45 g $Na_2CO_3$ und 7,6 g Natrium-Aluminat (von Beispiel 1) und 500 ml Wasser. Die Temperatur wird auf 180°C gesteigert und die Rührung auf etwa 50 U/min geregelt. Nach 4 h kühlt man den Ansatz ab, wäscht das Produkt mehrmals auf einer Nutsche mit Wasser und trocknet bei 140°C. Die Ausbeute beträgt 80 g = 98%. Das Produkt zeigt im Vergleich zu Beispiel 1 schlechtere Kristallinität im Röntgenbeugungsdiagramm, geringere Austauschkapazität und wesentlich schlechteres Quellvermögen. Es bildet in wäßriger Suspension auch kein Gel.

Tabelle 1: Reaktionsparameter

| Bsp. | x | (Na-Al): (Mg+Si+3/2Al) | pH-Wert nach Abkühlen | Ansatz $SiO_2+Al_2O_3$ [g/l] | Konzentration Saponit [g/l] |
|---|---|---|---|---|---|
| 1 | 0,8 | 0,22 | 9,9 | 40 | 67 |
| 2 | 1,0 | 0,34 | 13,2 | 48 | 81 |
| 3 | 1,2 | 0,34 | 13,4 | 65 | 109 |
| 4 | 0,8 | 0,22 | 9,9 | 41 | 67 |
| 5 | 1,0 | 0,34 | 13,0 | 48 | 81 |
| 6 | 0,8 | 0,06 | 8,9 | 22 | 37 |

Tabelle 2: Eigenschaften

| Bsp. | (060)-Halbwertsbreite | Austauschkapazität [meq/100 g] | Enslinwert [ml.100/g] | Optische Dichte | Bingham-Fließgrenze [$dyn/cm^2$] |
|---|---|---|---|---|---|
| 1 | 1,1 | 80 | 2280 | 13 % | 235 |
| 2 | 1,1 | 100 | 2090 | 26 | 283 |
| 3 | 0,9 | 118 | 1190 | 3 | 174 |
| 4 | 1,1 | 81 | 1665 | 6 | 156 |
| 5 | 1,6 | 85 | 870 | 0 | - |
| 6 | 1,4 | 64 | nicht best. | 0 | - |

**Patentansprüche**

1. Verfahren zur Herstellung eines kristallinen quellfähigen Schichtsilikats vom Saponit-Typ der Formel

$$[Mg_6(Si_{8-x}Al_x)O_{20}(OH)_4]^{x-} \cdot \frac{x}{z}M^{z+} \; n\; H_2O$$

in der
x eine Zahl kleiner als 1,5 aber mindestens 0,2 ist,
z eine ganze Zahl von 1 bis 3 ist,
M ein Kation der Wertigkeit z bedeutet und
n eine Zahl unter 20 ist,

wobei man eine Magnesiumionen enthaltende wäßrige Lösung oder Suspension, eine Siliciumdioxid-Quelle, eine Aluminiumoxid-Quelle und eine Natriumoxid-Quelle vereinigt und die dabei verwendeten Atomverhältnisses Mg/Si und Mg/Al der Zusammensetzung des gewünschten Saponits entsprechen, dadurch gekennzeichnet, daß das Atomverhältnis

$$(Na-Al) : (Mg + Si + 3/2 \cdot Al)$$

zwischen x/5 und 1 liegt, wobei Na die Menge der in alkalischen Verbindungen vorliegenden Natriumatome bedeutet und der pH-Wert des Reaktionsgemisches mindestens 9,0 beträgt, man die Kristalle des gebildeten synthetischen Saponits in der Natriumform von der Mutterlauge abtrennt und gegebenenfalls mit einer wäßrigen Lösung oder Suspension eines Salzes mit dem Kation $M^{z+}$ behandelt und nach erfolgtem Kationenaustausch von der wäßrigen Phase abtrennt.

2. Verfahren gemäß Anspruch 1, dadurch gekennzeichnet, daß man eine wäßrige Lösung oder Suspension eines Magnesiumsalzes auf eine Temperatur von 110 - 373°C unter Eigendruck aufheizt und in diesem Temperaturbereich, vorzugsweise unter ständiger Durchmischung, eine Siliciumdioxid-Quelle, eine Aluminiumoxid-Quelle und eine Natriumoxid-Quelle in Form wäßriger Lösungen oder Suspensionen zugibt mit der Maßgabe, daß die Natriumoxid-Quelle und die Aluminiumoxid-Quelle nicht vor der Siliciumoxid-Quelle zugegeben werden und man das entstehende Gemisch längere Zeit im Temperaturbereich von 110 - 373°C hält.

3. Verfahren gemäß Anspruch 1, dadurch gekennzeichnet, daß als Natriumoxid-Quelle ein Gemisch aus Natriumcarbonat und Natriumhydroxid im Molverhältnis 1 : 5 bis 1: 3 eingesetzt wird.

4. Verfahren nach Anspruch 2, dadurch gekennzeichnet, daß die Zugabe der Komponenten zum Magnesiumsalz bei 150 - 250 °C erfolgt.

5. Verfahren nach Anspruch 1, dadurch gekennzeichnet, daß der Reaktionsansatz mindestens 20 g/l (Siliciumdioxid plus Aluminiumoxid) enthält.

**Claims**

1. A process for the preparation of a crystalline swellable sheet silicate of the saponite type, of the formula

$$[Mg_6(Si_{8-x}Al_x)O_{20}(OH)_4]^{x-} \cdot \frac{x}{z} M^{z+} \; n \; H_2O$$

in which
x is a number which is less than 1.5 but at least 0.2,
z is an integer from 1 to 3,
M denotes a cation having a valency of z and
n is a number less than 20,
an aqueous solution or suspension containing magnesium ions, a silica source, an alumina source and a sodium oxide source being combined and the atomic ratio of Mg/Si and Mg/Al used corresponding to the composition of the desired saponite, wherein the atomic ratio

$$(Na-Al) : (Mg + Si + 3/2 \cdot Al)$$

is between x/5 and 1, Na denoting the amount of sodium atoms present in alkaline compounds and the pH of the reaction mixture being at least 9.0, and the crystals of the resulting synthetic saponite are separated off in the sodium form from the mother liquor and, if appropriate, are treated with an aqueous solution or suspension of a salt having the cation $M^{z+}$ and, after cation exchange is complete, are separated off from the aqueous phase.

2. The process as claimed in claim 1, wherein the aqueous solution or suspension of magnesium salt is heated to a temperature of 110–373°C under autogenous pressure, and a silica source, an alumina source and a sodium oxide source in the form of aqueous solutions or suspensions are added in this temperature range, preferably with constant thorough mixing, with the proviso that the sodium oxide source and the alumina source are not added before the silica source, and the resulting mixture is kept for a prolonged period in the temperature range of 110–373°C.

3. The process as claimed in claim 1, wherein a mixture of sodium carbonate and sodium hydroxide in a molar ratio of 1:5 to 1:3 is used as the sodium oxide source.

4. The process as claimed in claim 2, wherein the addition of the components to the magnesium salt is carried out at 150–250°C.

5. The process as claimed in claim 1, wherein the reaction mixture contains at least 20 g/l of (silica plus alumina).

## Revendications

1. Procédé de fabrication d'un phyllosilicate cristallisé gonflable, du genre des saponites, de formule:

$$[Mg_6(Si_{8-x}Al_x)O_{20}(OH)_4]^{x-} \cdot \frac{x}{z} M^{z+} \; n\ H_2O$$

dans laquelle:
x est un nombre inférieur à 1,5, mais au moins égal à 0,2,
z un entier de 1 à 3,
M désigne un cation de valence z et
n un nombre inférieur à 20,
dans lequel on réunit une suspension ou une solution aqueuse contenant des ions magnésium, une source de dioxyde de silicium, une source d'oxyde d'aluminium et une source d'oxyde de sodium, les rapports atomiques Mg/si et Mg/Al correspondant à la composition de la saponite que l'one veut obtenir, procédé caractérisé en ce que le rapport atomique:

$$(Na-Al) : (Mg + Si + 3/2 \cdot Al)$$

est compris entre x/5 et 1, Na désignant la quantité d'atomes de sodium dans les composés alcalins et le pH du mélange réactionnel étant d'au moins 9,0, on sépare de la liqueur-mère les cristaux de la saponite synthéthique formée sous la forme sodique et le cas échéant on les traite avec une suspension ou une solution aqueuse d'un sel du cation $M^{z+}$, puis après l'échange de cations, on les sépare de la phase aqueuse.

2. Procédé selon la revendication 1, caractérisé en ce que l'on chauffe une solution ou une suspension aqueuse d'un sel de magnésium à une température de 110 à 373°C sous la pression autogène, puis on lui ajoute dans cet intervalle de températures, de préférence avec une agitation constante pour avoir un bon mélange, une source de dioxyde de silicium, une source d'oxyde d'aluminium et une source d'oxyde de sodium en solutions ou en suspensions aqueuses, avec la condition que la source d'oxyde de sodium et la source d'oxyde d'aluminium ne soient pas ajoutées avant la source d'oxyde de silicium, et on maintient le mélange pendant un certain temps dans l'intervalle de températures de 110 à 373°C.

3. Procédé selon la revendication 1, caractérisé en ce que la source d'oxyde de sodium est un mélange de carbonate de sodium et d'hydroxyde de sodium dans un rapport molaire compris entre 1:5 et 1:3.

4. Procédé selon la revendication 2, caractérisé en ce que l'addition des composants au sel de magnésium se fait entre 150 et 250°C.

5. Procédé selon la revendication 1, caractérisé en ce que le mélange de réaction contient au moins 20 g/litre du total dioxyde de silicium plus oxyde d'aluminium.